# FASCICULE DE BREVET EUROPEEN

(11) **EP 2 082 958 B1**
(45) Date de publication et mention de la délivrance du brevet: **04.08.2010**
(21) Numéro de dépôt: 09000702.2
(22) Date de dépôt: 20.01.2009
(51) Int. Cl.: B64C 27/473

(54) **Pale de giravion munie d'un longeron intégrant une attache de fixation, et procédé de fabrication d'un tel longeron**
Blatt eines Drehflügelflugzeugs mit Längsträger, der mit einer Befestigung ausgestattet ist, und Herstellungsverfahren eines solchen Längsträgers
Rotorcraft blade equipped with a spar including a fixing attachment and method for manufacturing such a spar

(30) Priorité: 25.01.2008 FR 0800383
(43) Date de publication de la demande: 29.07.2009
(73) Titulaire: EUROCOPTER, 13725 Marignane Cédex (FR)
(72) Inventeur: Metivier, Rémi, 75009 Paris (DE)
(74) Mandataire: GPI & Associés

(56) Documents cités:
- FR-A- 2 030 036
- US-A- 3 923 422
- US-A- 4 339 230

## Description

La présente invention concerne une pale de giravion munie d'un longeron intégrant une attache de fixation, ainsi que le procédé permettant de fabriquer ce longeron.

L'invention se situe donc dans le domaine technique des pales de giravion.

Un giravion est muni d'au moins un moteur qui entraîne un rotor principal ayant pour but d'assurer la sustentation, voire même la propulsion, de l'appareil. Ce rotor comporte un moyeu, mis en mouvement via un arbre rotor entraîné par le moteur, sur lequel sont agencées une pluralité de pales.

Lors de leur mouvement rotatif, les pales sont soumises à un torseur d'efforts et par suite subissent un effort centrifuge ainsi que des effets multiples dus au battement, à la, traînée et à la torsion, la torsion étant provoquée notamment par les changements de pas visant à modifier l'inclinaison des pales par rapport au plan du moyeu.

En outre, le moyeu comporte généralement une pluralité de bras, éventuellement flexibles en battement, au bout desquels sont agencées les pales. Les efforts dus en particulier à la force centrifuge sont alors transmis par la pale à la zone centrale non flexible du moyeu.

Le document US4339230 présente des pales adaptables sur hélicoptère.

Un premier type de procédé consiste à fabriquer un corps de pale puis à fixer ce corps au moyeu du rotor par des attaches de fixation spécifiques.

Les documents FR 2874852, FR 2321997, EP 0011330, FR 2518979 présentent une pluralité de techniques pouvant permettre de fabriquer un corps de pale par bobinage ou par tressage de matériaux composites.

Il convient ensuite de solidariser le corps de pale à une attache de fixation.

Selon le document FR 2030038 par exemple, on forme par bobinage un élément cylindrique qui constituera le revêtement extérieur de la pale. On découpe ensuite longitudinalement en deux sous-ensembles cet élément cylindrique, chaque sous-ensemble étant alors disposé dans un moule.

Par ailleurs, on réalise par bobinage le longeron de la pale. Ce longeron comporte un premier bloc de couches de fibres présentant une angulation de 45° avec l'axe longitudinal de la pale, puis un deuxième bloc de couches de fibres présentant une angulation de 30° avec cet axe longitudinal, et enfin un troisième bloc de couches de fibres présentant une angulation de 15° avec l'axe longitudinal.

Le longeron débouchant sur l'extérieur au niveau du pied de la pale par une ouverture, une attache bobinée est coincée dans cette ouverture puis fixée au moyeu du rotor. Ensuite, on termine la paie en insérant le longeron entre les deux moules dans lesquels sont disposés les deux sous-ensembles du revêtement extérieur de la pale.

La pale transmet alors les efforts subis au moyeu successivement par son longeron et son attache de fixation.

Ce procédé de fabrication est efficace mais néanmoins limité.

En effet, les temps de fabrication sont élevés puisque de multiples étapes sont mises en oeuvre, ce qui engendre des surcoûts évidents.

De plus, il est possible de constater des défauts au niveau du pied de la pale, l'attache de fixation étant susceptible de bouger par rapport au longeron.

Un deuxième type de procédé consiste à solidariser l'attache de fixation au longeron de la pale durant la fabrication de ce longeron et non après.

On connaît par le document US 3923422 une telle solution.

Au niveau du pied de la pale, le longeron est enroulé autour d'une attache de fixation munie d'un axe vertical sensiblement parallèle à l'axe de rotation du rotor.

Toutefois, afin de réaliser l'enroulement vertical, il convient de vriller le longeron. Un tel vrillage de l'ordre de quatre-vingt dix degrés présente l'Inconvénient d'être éventuellement destructif, dans la mesure où un longeron est principalement constitué de rubans de fibres unidirectionnelles dans le cas de pales en matériaux composites.

Il est de plus malaisé de disposer à plat sur l'extrados et l'intrados de la pale les rubans unidirectionnels provenant de la section vrillée du longeron réparti.

Le vrillage peut alors conduire à une faible reproductivité de la forme ainsi que des caractéristiques mécaniques et vibratoires d'une pale à une autre.

De plus, si des éléments de remplissage doivent être agencée dans la pale, ces derniers seront de forme complexe et varieront d'une pale à l'autre puisque le vrillage du longeron n'est pas reproduit à l'identique. Il devient ainsi difficile d'automatiser la fabrication des pales.

En outre, le problème d'ancrage de l'attache de fixation demeure.

Il est alors envisageable d'enrouler le longeron « à l'horizontale », conformément à la proposition décrite par le document EP0657646.

Selon ce document, la pale est munie d'une attache de fixation métallique au niveau de son pied de pale et d'un élément métallique rapporté au niveau de son extrémité libre.

L'attache de fixation et l'élément métallique sont disposés dans des têtes de serrage d'une machine à enrouler. Des fibres unidirectionnelles sont alors enroulées horizontalement autour de l'attache de fixation et de l'élément métallique. Ces fibres sont ainsi sensiblement parallèles à l'axe longitudinal de la pale et sont à même de reprendre les efforts centrifuges exercés sur cette pale.

La machine à enrouler dispose alors des nappes de fibres croisées entre l'attache de fixation et l'élément métallique rapporté.

Des éléments profilés avant et arrière sont ensuite posés et recouverts d'une nappe de fibres croisées.

Par conséquent, il reste possible de voir l'attache de fixation bouger selon un axe transverse perpendiculaire à l'axe longitudinal de la pale ce qui pourrait conduire à la mise au rebut de la pale.

La présente invention a pour alors objet de proposer une pale aisément manufacturable et reproductible, cette pale garantissant en outre un ancrage de qualité de son attache de fixation.

Selon l'invention, une pale de giravion est munie d'un remplissage d'attache rigide et d'un longeron qui s'étend selon l'envergure de la pale, d'un pied de cette pale vers une extrémité libre de cette pale, le remplissage d'attache comportant des faces supérieure, inférieure, avant, arrière, latérale gauche, et latérale droite. Cette pale est remarquable en ce que longeron comporte une succession de couches de fibres qui emprisonne le emplissage d'attache au niveau du pied de la pale, le longeron étant solidarisé aux faces supérieure, inférieure, avant, arrière et latérale gauche du remplissage d'attache.

Le remplissage d'attache, qui représente l'attache de fixation de la pale est intimement lié au longeron et ne risque pas de se détacher de ce dernier.

En effet, en l'englobant, le longeron garantit un ancrage sans faille de ce remplissage d'attache.

En outre, nous verrons que la pale est facilement manufacturable puisqu'il suffit de disposer les fibres constituant le longeron autour du remplissage d'attache et d'un mandrin, par bobinage ou par tressage par exemple.

La pale possède de plus une ou plusieurs des caractéristiques additionnelles qui suivent.

Pour commencer, le longeron comporte des portions supérieure, inférieure, avant, arrière et une portion de fond respectivement solidarisées aux faces supérieure, inférieure, avant, arrière et latérale gauche du remplissage d'attache.

Le longeron entoure le remplissage d'attache et adhère à ce remplissage de manière è garantir son ancrage. Le remplissage d'attache est donc solidaire du longeron, par collage par exemple.

De préférence, la portion de fond est concave, sa concavité étant en regard de l'extrémité libre de la pale opposée à son pied.

Le longeron représente alors une sorte de tube s'intégrant parfaitement au profil de la pale et se terminant par un fond au niveau du pied de pale afin de maintenir aisément le remplissage d'attache. A l'opposé, le longeron est éventuellement débouchant du côté de l'extrémité libre de la pale.

Au niveau du pied de pale, le longeron a une forme hémisphérique, tronquée pour être sensiblement plane du côté de l'extrados et de l'intrados de la pale.

Il est à noter que la géométrie très particulière et innovante du longeron au pied de la pale participe étonnamment à une bonne transmission des efforts, notamment des efforts centrifuges.

Par ailleurs, il est avantageux que le longeron présente des arêtes arrondies entres ses diverses portions pour ne pas créer d'arêtes vives susceptibles de détériorer les fibres du longeron durant sa fabrication.

Selon une variante de l'invention, le longeron étant un longeron bobiné, ladite succession de couches consiste en un empilement de couches de fibres, de la fibre de verre par exemple.

Cette succession comportant au moins un empilement muni d'une première, d'une deuxième et d'une troisième couches de fibres présentant respectivement une première, une deuxième et une troisième angulations par rapport à un axe longitudinal de la pale, à savoir l'axe de pas de la pale, les première et troisième angulations sont comprises entre 15° et 90° alors que la deuxième angulation est comprise entre 0° et 15°.

Contrairement à un longeron classique muni d'un premier bloc de renforts généralement longitudinaux destiné à reprendre les efforts centrifuges et de battement de la pale et d'un deuxième bloc de renforts destiné à reprendre les efforts de trainée et de torsion, le longeron selon l'invention possède une succession de couches présentant des angulations différentes.

Ainsi, la deuxième couche est adaptée à la transmission des efforts centrifuges et de battement au moyeu du rotor, alors que les première et troisième couches sont plutôt prévues pour transmettre les efforts de trainée et de torsion.

On note de façon surprenante qu'en discrétisant de la sorte les couches de fibres de manière à réaliser un empilement particulier, on obtient une structure quasi-isotrope plus robuste et plus saine que les structures classiques.

De même, la densité des couches de fibres, c'est-à-dire leur masse surfacique, peut varier d'une couche à l'autre mais aussi en fonction de l'envergure de la pale. Par suite, la pale est parfaitement optimisée en fonction des efforts qu'elle doit supporter, les fibres étant réparties de manière très précise pour limiter la masse de la pale.

Enfin, le longeron et l'attache de remplissage comportent au moins un passage, respectivement un perçage et un orifice en vis-à-vis l'un de l'autre, pour autoriser l'insertion d'une broche de fixation de la pale au moyeu d'un rotor.

Par suite, au pied de la pale, les fibres de la deuxième couche se trouvent piégées dans la forme hémisphérique du longeron et permettent d'assurer la transmission des efforts centrifuges.

En effet, la portion de fond du longeron exerce alors des efforts sur le remplissage d'attache, ces efforts étant ensuite transmis par matage aux broches de fixation traversant la pale. Les broches tendent donc à mater le remplissage et le longeron.

De plus, en tournant sur l'arrière du pied de pale, ces fibres longitudinales de la deuxième couche créent un ancrage mécanique du remplissage d'attache.

La présente invention a aussi pour objet le procédé permettant de fabriquer aisément une pale de giravion telle que décrite précédemment.

Ce procédé de fabrication d'une pale de giravion selon l'invention est remarquable en ce que l'on procède notamment et successivement aux étapes suivantes pour fabriquer le longeron de la pale :
a) on solidarise un premier arbre de maintien à un remplissage d'attache rigide de la pale fixé de manière réversible à un mandrin par un système d'emboitement,
b) on dispose des fibres, par bobinage éventuellement, autour d'un ensemble comportant le remplissage d'attache et le mandrin afin de fabriquer un longeron de la pale, le longeron comportant alors une succession de couches de fibres qui emprisonne le remplissage d'attache au niveau du pied de la paie, et
c) on enlève le premier arbre à l'issue de la polymérisation du longeron.

Lorsque le longeron et l'attache de fixation associée, à savoir le remplissage d'attache, sont terminés, il suffit de disposer d'éventuels éléments de remplissage et un revêtement externe pour terminer la pale selon des techniques éprouvées.

De manière alternative, on peut disposer le longeron et son attache intégré dans un revêtement creux.

On constate que la fabrication de cette pale est alors très simple, aisément reproductive et rapide à mettre en oeuvre ce qui répond au problème posé.

Le procédé peut comporter une ou plusieurs des manipulations additionnelles suivantes.

Tout d'abord, durant l'étape c), on peut couper une extrémité distale du longeron, à savoir l'extrémité distale du longeron opposée au remplissage d'attache, pour enlever le mandrin.

En effet, en fonction du besoin, il n'est pas forcément nécessaire de conserver un élément à l'intérieur du longeron. Par suite, en coupant son extrémité distale, il devient possible de déboiter le mandrin du remplissage d'attache pour l'enlever.

Ensuite, le premier arbre de maintien permet de tenir l'ensemble remplissage d'attache/ mandrin, lors de l'enroulement des fibres constituant le longeron, contre la machine réalisant ledit enroulement, par bobinage par exemple.

Ainsi, des fibres vont être enroulées par séquence autour dudit ensemble, du pied de la pale à l'extrémité distale du longeron, et vont être ligaturées au niveau du pied de pale.

Plus précisément, les fibres sont aussi enroulées autour du premier arbre de maintien qui va alors jouer aussi le rôle d'arrêt mécanique.

A l'issue de l'étape c), durant une phase d'ébavurage faisant suite à la polymérisation du longeron, on s'occupe du premier arbre. Une partie saillante du premier arbre saillant du remplissage d'attache, on enlève le premier arbre à l'aide d'un système mécanique usuel puis on tronçonne les fibres qui recouvraient la partie saillante du premier arbre.

Par ailleurs, durant une étape d), on perce le longeron au niveau du remplissage d'attache pour permettre le passage d'au moins une broche de fixation de la pale à un moyeu de rotor.

De même, préalablement à l'étape a), on réalise au moins un orifice dans le remplissage d'attache qui sera en vis-à-vis du perçage réalisé durant l'étape d).

L'orifice ménagé dans le remplissage d'attache et le perçage correspondant du longeron autoriseront ainsi le passage d'une broche de fixation.

Si l'orifice de remplissage est recouvert par le revêtement extérieur de la pale, on comprend aisément que ce revêtement sera percé pour libérer ledit orifice.

En outre, selon un premier mode de réalisation, le mandrin est un mandrin fusible. Ainsi, le mandrin ayant une âme rigide entourée d'une zone fusible recouverte d'une vessie gonflable, durant une étape intermédiaire b') comprise entre les étapes b) et c), on détruit au moins partiellement ladite zone fusible pour pouvoir enlever le mandrin ultérieurement.

Cette étape b') peut se produire durant la cuisson du longeron dans un moule prévu à cet effet.

Selon un deuxième mode de réalisation, le mandrin est un mandrin permanent destiné à rester dans le longeron. Le mandrin permanent est réalisé à partir d'un matériau ayant une faible masse volumique, de la mousse par exemple

Enfin, si la pale a une longueur importante, durant l'étape a), on solidarise le mandrin à un deuxième arbre de maintien. Eventuellement, les premier et deuxième arbres de maintien sont solidaires l'un de l'autre et constituent un seul et même arbre de maintien.

L'invention et ses avantages apparaîtront avec plus de détails dans le cadre de la description qui suit avec un exempte de réalisation donné à titre illustratif en référence aux figures annexées qui représentent :
- la figure 1, une vue schématique explicitant l'étape a) du procédé selon l'invention,
- la figure 2, une vue schématique explicitant l'étape b) du procédé selon l'invention, et
- la figure 3, une vue montrant un empilement selon l'invention.

Les éléments présents dans plusieurs figures distinctes sont affectés d'une seule et même référence.

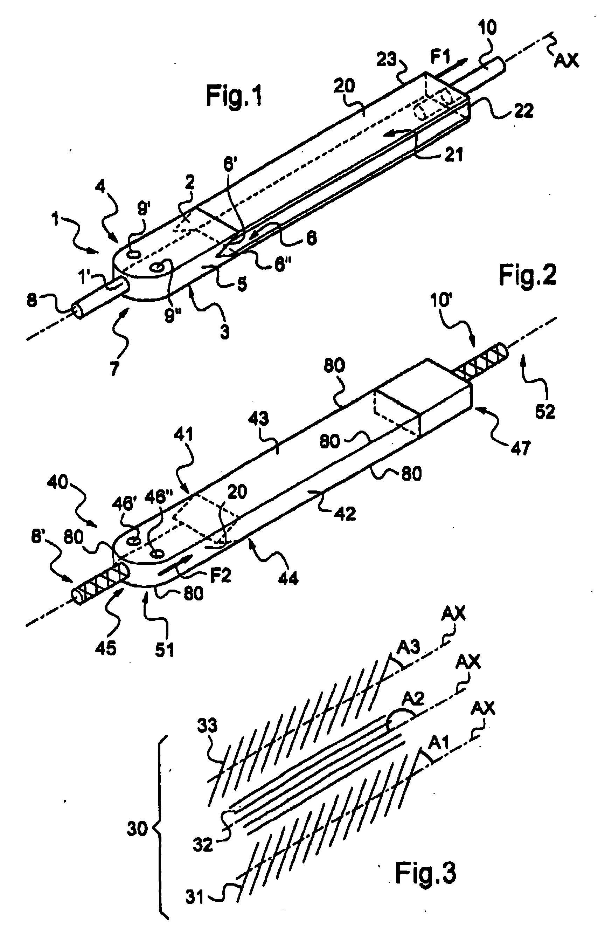

En référence à la figure 1, un opérateur réalise un remplissage d'attache 1, en matériaux composites par exemple, muni d'une face supérieure 2, d'une face inférieure 3, d'une face avant 4, d'une face arrière 5, d'une face latérale droite 6 et d'une face latérale gauche 7.

Lorsque la pale munie de ce remplissage d'attache 1 sera agencée sur le moyeu d'un rotor, la face latérale gauche 7 sera la face du remplissage d'attache 1 la plus proche de l'axe de rotation du moyeu alors que la face latérale droite 6 sera la plus proche de l'extrémité libre de la pale, à savoir l'extrémité de la pale opposée au pieds de cette pale.

Le remplissage d'attache 1 est pré-percé afin d'être traversé de part en part, des orifices 9', 9" débouchant chacun sur les faces supérieure 2 et Inférieure 3. Ces orifices 9', 9" accueilleront des broches de fixation permettant de fixer la pale équipée du longeron au moyeu d'un rotor.

Eventuellement, les orifices 9'. 9" peuvent comporter des douilles de fixations usuelles.

De même, le remplissage d'attache comporte une ouverture 1' pour pouvoir être solidarisé à un premier arbre de maintien 8.

Par ailleurs, la face latérale droite 6 du remplissage d'attache comporte un système d'emboitement d'un mandrin 20. Plus précisément, la face latérale droite 8 comporte deux plans inclinés 6', 6" entre lesquels est coincé le mandrin 20.

De par ces plans inclinés, la forme de la face latérale droite 6 permet au remplissage d'attache 1 d'avoir une épaisseur dégressive en vis à vis du mandrin 20. Ainsi, cette forme garantit une variation de rigidité avantageusement progressive et non pas brutale.

Il est à noter qu'il est possible de concevoir d'autres formes dégressives, en mettant en oeuvre une face latérale droite comportant un unique plan incliné par exemple.

On comprend que la fixation du mandrin 20 au remplissage d'attache 1 est réversible, le mandrin 20 pouvant être déboité du remplissage d'attache 1 quand un opérateur tire sur ce mandrin 20 selon la flèche F1.

En outre, selon le premier mode de réalisation représenté sur la figure 1, le mandrin 20 comporte une âme centrale rigide 21 solidarisée à une zone fusible 22 rétractable, en polystyrène ou en matériaux solubles par exemple.

Cette zone rétractable 22 est alors recouverte d'une vessie gonflable 23.

Selon un deuxième mode de réalisation, non représenté sur les figures, il n'est pas obligatoire d'utiliser un mandrin susceptible d'être enlevé à l'issue de la fabrication du longeron. En effet, si ce mandrin est confectionné avec une matière ayant une faible masse volumique, de la mousse par exemple, le mandrin a une masse relativement faible et peut donc être conservé. Dans ce cas de figure, le mandrin ne comportera qu'une âme rigide de faible masse volumique.

Par ailleurs, durant une étape a) du procédé selon l'invention, on solidarise un premier arbre de maintien 8 au remplissage d'attache 1 en le disposant dans l'ouverture 1'.

De même, on solidarise un deuxième arbre de maintien 10 à l'âme rigide 21 du mandrin 20.

Ces arbres de maintien permettront d'agencer l'ensemble remplissage d'attache 1/ mandrin 20 sur un dispositif de dépose de fibres de bobinage ou de tressage.

A titre de variante, les premier et deuxième arbres de maintien constituent les bouts d'un unique arbre de maintien qui traverse de part en part le remplissage d'attache 1 et le mandrin 20.

Cet unique arbre de maintien peut d'ailleurs représenter l'âme rigide du mandrin 20 fusible.

En référence à la figure 2, durant une étape b) qui succède à l'étape a), le dispositif de dépose de fibres dispose, par bobinage par exemple, des fibres autour de l'ensemble autour du remplissage d'attache 1 et du mandrin 20 afin de confectionner le longeron 40qui s'étend du pied 51 de cette pale vers une extrémité distale 47 située à proximité de l'extrémité libre 52 de la pale.

Le longeron 40 comporte alors une succession de couches de fibres qui emprisonne , à savoir enserre, le remplissage d'attache 1 au niveau du pied 51 de la pale.

Par suite, le longeron 40 englobe totalement l'ensemble remplissage d'attache 1/mandrin 20.

En effet, les portions supérieure 43, inférieure 44, avant 41, arrière 42 et la portion de fond 45 du longeron 40 sont respectivement solidarisées aux faces supérieure 2, inférieure 3, avant 4, arrière 5 et latérale gauche 7 du remplissage d'attache 1. En l'emprisonnant ainsi, il est évident que le longeron 40 garantit un ancrage parfait de ce remplissage d'attache.

L'attache de fixation de la pale, représentée par le remplissage d'attache, est alors totalement intégrée dans le longeron 40.

Le dispositif de dépose de fibres, et surtout la forme du remplissage d'attache 1 et du mandrin, permettent au longeron 40 de présenter des arêtes 80 entre ces diverses portions, par exemple entre sa portion supérieure 43 et la portion de fond 45.

Ces arêtes 80 sont arrondies pour ne pas risquer de détériorer les fibres, voire de les couper.

A ce stade, il est utile de constater que les fibres sont aussi bobinées sur les parties saillantes 8' et 10' des premier et deuxième arbres de fixation.

Par ailleurs, la portion de fond 45 du longeron 40 est concave, sa concavité étant en regard de l'extrémité libre 52 de la pale et non pas de son pied 51.

A l'issue de l'étape b), durant une étape intermédiaire b'), on dispose l'ensemble remplissage d'attache 1/ mandrin 20, recouvert de fibres, dans un moule chauffant.

Un moyen de mise en pression est agencé contre le deuxième arbre de maintien 10 pour mettre en pression la vessie gonflable 23.

Il est à noter que le deuxième arbre de maintien 10 peut comporter une ouverture par laquelle on glisse la partie de la vessie gonflable à relier au moyen de mise en pression.

Les fibres disposées sur le mandrin durant l'étape b) sont alors plaquées contre le moule pour être mises en forme.

On engage alors la phase de polymérisation du longeron 40. Lors de la cuisson, la chaleur provoque la rétraction de la zone fusible 22.

A la fin de la polymérisation, durant une étape c), un opérateur enlève le premier arbre 8 puis tronçonne les fibres qui recouvraient la partie saillante 8' du premier arbre 8.

De plus, on dégonfle le vessie gonflable 23 puis on coupe l'extrémité distale 47 du longeron 40.

Le volume de la zone fusille 22 ayant été réduit d'un facteur 8 à 10, la vessie gonflable 23 ne plaque plus contre les parois supérieure 43, inférieure 44, avant 41, et arrière 42 du longeron 40. Un opérateur peut donc déboiter le mandrin 20 et l'extraire de l'intérieur du longeron 40.

Ce longeron 40 est donc débouchant du côté de l'extrémité libre 52 de la pale.

Enfin, on perce le longeron 40 au niveau du pied de pale de façon à obtenir deux perçages 46', 46" en vis-à-vis des orifices 9', 9" du remplissage d'attache.

Il est à noter que le remplissage d'attache 1 n'est pas nécessairement pré-percé. Si tel est le cas, alors les orifices 9', 9" seront réalisés en même temps que les perçages 46', 46".

Des broches de fixation de la pale au moyeu d'un rotor pourront alors traverser le longeron 40.

Pour achever la fabrication de la pale, il suffit par exemple de disposer le longeron 40 dans un revêtement extérieur profilé par des méthodes éprouvées.

Par conséquent, on constate que la pale est aisément manufacturable. Le procédé à appliquer est parfaitement reproductible ce qui garantit l'obtention de pales identiques.

De plus, le remplissage d'attache de la pale est ceinturé par le longeron 40 et ne risque pas de se détacher durant l'utilisation de la pale.

En référence à la figure 3, les fibres sont disposées sur le remplissage d'attache 1 et le mandrin 20 de façon à entraîner la formation d'une succession de couches pourvue d'au moins un empilement 30.

Cet empilement comporte une première couche 31 de fibres d'un premier type présentant une première angulation A1 avec l'axe longitudinal AX de la pale, à ravoir l'axe de variation de pas de la pale, par exemple.

La première angulation est alors comprise entre 15° et 90°.

Cette première couche est recouverte d'une deuxième couche 32 de fibres d'un deuxième type présentant une deuxième angulation A2 avec l'axe longitudinal AX de la pale comprise entre 0° et 15°.

Enfin, la deuxième couche est recouverte d'une troisième couche 33 de fibres, du premier type, présentant une troisième angulation A3 avec l'axe longitudinal AX de la pale comprise entre 15° et 90°.

Une couche selon le deuxième type, à savoir pourvue de fibres présentant une angulation comprise entre 0° et 15° avec l'axe longitudinal AX, est donc agencée entre deux couches selon le premier type, à savoir pourvues de fibres présentant une angulation comprise entre 15° et 90° avec l'axe longitudinal AX.

Au titre d'une variante non représentée sur les figures, une couche selon le premier type, è savoir pourvue de fibres présentant une angulation comprise entre 15° et 90° avec l'axe longitudinal AX, est agencée entre deux couches selon le deuxième type, à savoir pourvues de fibres présentant une angulation comprise entre 0° et 15° avec l'axe longitudinal AX.

Plus globalement, la succession de couches constitutives du longeron alterne une couche du premier type avec une couche du deuxième type.

Par ailleurs, les couches peuvent être plus ou moins denses en fibres et peuvent s'arrêter à n'importe quelle position selon l'envergure de la pale en fonction des besoins de rigidité et de centrage de la pale.

Le longeron 40 transmet alors efficacement les efforts centrifuges, de battement, de traînée et de torsion au moyeu du rotor.

Les efforts centrifuges sont repris par les fibres longitudinales du deuxième type qui exerce une traction sur la portion de fond 45 du longeron 40 selon la flèche F2.

Cette paroi de fond 45 exerce à son tour une pression sur le remplissage d'attache 1 qui agit par matage sur les broches de fixation pour transmettre les efforts centrifuges au moyeu.

On note que les fibres longitudinales du deuxième type sont cependant coupées au niveau du pied lorsqu'un opérateur réalise les perçages 46', 46". Cependant, de manière surprenante, la perte de résistance en résultant n'est pas suffisante pour empêcher la reprise des efforts centrifuges

De même, les efforts de battement sont transmis par les fibres du deuxième type au remplissage d'attache et par suite au moyeu, alors que les efforts de traînée et de torsion sont transmis par les fibres du premier type.

Naturellement, la présente invention est sujette à de nombreuses variations quant à sa mise en oeuvre. Bien que plusieurs modes de réalisations aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Par exemple, les figures montrent un longeron 40 pourvu de passages verticaux afin de pouvoir accueillir des broches de fixation disposées verticalement, à savoir sensiblement parallèlement à la pesanteur.

Néanmoins, il est concevable de modifier le longeron 40 en perçant ses portions avant 41 et arrière 42, ainsi que les faces avant 4 et arrière 5 du remplissage d'attache 1 pour autoriser une fixation horizontale.

Par ailleurs, le deuxième arbre peut être fixé dans un dispositif d'équilibrage de la pale. Par suite, lorsque le deuxième arbre de maintien sera enlevé, à l'issue de l'étape c) par exemple, le dispositif d'équilibrage obturera le longeron.

## Revendications

1. Pale de giravion munie d'un remplissage d'attache (1) rigide et d'un longeron (40) qui s'étend selon l'envergure de la pale d'un pied (51) de la pale vers une extrémité libre (52) de cette pale, ledit remplissage d'attache (1) comportant des faces supérieure (2), inférieure (3), avant (4), arrière (5), latérale gauche (7), et latérale droite (6),
ledit longeron (40) comportant une succession de couches (31, 32, 33) de fibres qui emprisonne ledit remplissage d'attache (1) au niveau du pied (51) de ladite pale, ledit longeron (40) étant solidarisé auxdites faces avant (4), arrière (5) et latérale gauche (7) dudit remplissage d'attache (1), **caractérisé en ce que** ledit longeron (40) est solidarisé auxdites faces supérieure (2) et inférieure (3) dudit remplissage d'attache (1).

2. Pale selon la revendication 1,
**caractérisée en ce que** ledit longeron (40) comporte des' portions supérieure (43), inférieure (44), avant (41), arrière (42) et une portion de fond (45) respectivement solidarisées aux faces supérieure (2), inférieure (3), avant (4), arrière (5) et latérale gauche (7) dudit remplissage d'attache (1).

3. Pale selon la revendication 2,
**caractérisée en ce que** ledit longeron (40) présente des arêtes arrondies entres ses diverses portions.

4. Pale selon l'une quelconque des revendications 2 à 3,
**caractérisée en ce que** ladite portion de fond (45) est concave, sa concavité étant en regard de l'extrémité libre (52) de la pale, opposée à son pied (51).

5. Pale selon l'une quelconque des revendications précédentes,
**caractérisée en ce que**, ledit longeron (40) étant un longeron bobiné, ladite succession de couches consiste en un empilement de couches (31, 32, 33) de fibres.

6. Pale selon l'une quelconque des revendications précédentes
**caractérisée en ce que** ladite succession comportant au moins un empilement (30) muni d'une première, d'une deuxième et d'une troisième couches (31, 32, 33) de fibres présentant respectivement une première, une deuxième et une troisième angulations (A1, A2, A3) par rapport à un axe longitudinal (AX), lesdites première et troisième angulations (A1, A3) sont comprises entre 15° et 90° alors que la deuxième angulation (A2) est comprise entre 0° et 15°.

7. Pale selon l'une quelconque des revendications précédentes,
**caractérisée en ce que** ledit longeron (40) est débouchant du côté de l'extrémité libre (52) de la pale.

8. Pale selon l'une quelconque des revendications précédentes,
**caractérisée en ce que** ledit longeron (40) et l'attache de remplissage (1) comportent au moins un passage (9', 9', 46', 46") pour autoriser l'insertion d'un broche de fixation.

9. Procédé de fabrication d'une pale de giravion selon l'une quelconque des revendications 1 à 8,
**caractérisé en ce que** l'on procède notamment et successivement aux étapes suivantes pour fabriquer le longeron de la pale :
a) on solidarise un premier arbre de maintien (8) à un remplissage d'attache (1) rigide de la pale fixé de manière réversible à un mandrin (20),
b) on dispose des fibres autour d'un ensemble comportant ledit remplissage d'attache (1) et ledit mandrin (20) afin de fabriquer un longeron (40) de ladite pale, ledit longeron (40) comportant alors une succession de couches (31, 32, 33) de fibres qui emprisonne ledit remplissage d'attache (1) au niveau du pied (51) de ladite pale, et
c) on enlève ledit premier arbre (8) à l'issue de la polymérisation du longeron.

10. Procédé de fabrication selon la revendication 9,
**caractérisé en ce que**, durant l'étape c), on coupe une extrémité distale (47) du longeron (40) obtenu, à savoir l'extrémité distale (47) du longeron (40) opposée au dit remplissage d'attache (1), pour enlever ledit mandrin (20).

11. Procédé de fabrication selon l'une quelconque des revendications 9 à 10,
**caractérisé en ce que**, une partie saillante (8') du premier arbre (8) saillant du remplissage d'attache (1), à l'issue de l'étape c), on enlève le premier arbre puis on tronçonne les fibres qui recouvraient ladite partie saillante (8').

12. Procédé selon l'une quelconque des revendications 9 à 11,
**caractérisé en ce que**, durant une étape d), on perce le longeron (40) au niveau du remplissage d'attache (1) pour permettre le passage d'au moins une broche de fixation de la pale à un moyeu de rotor.

13. Procédé selon la revendication 12,
**caractérisé en ce que**, préalablement à l'étape a), on réalise au moins un orifice (9', 9") dans le remplissage d'attache qui sera en vis-à-vis du perçage (46', 46") réalisé durant l'étape d).

14. Procédé de fabrication selon l'une quelconque des revendications 9 à 13,
**caractérisé en ce que**, le mandrin (20) ayant une âme rigide (21) entourée d'une zone fusible (22) recouverte d'une vessie gonflable (23), durant une étape Intermédiaire b') comprise entre les étapes b) et c), on détruit au moins partiellement ladite zone fusible (22) pour pouvoir enlever le mandrin (20) ultérieurement.

15. Procédé de fabrication selon l'une quelconque des revendications 9 à 14,
**caractérisé en ce que** durant l'étape a), on solidarise ledit mandrin (20) à un deuxième arbre de maintien (10).

16. Procédé de fabrication selon la revendication 15,
**caractérisé en ce que**, les premier et deuxième arbres de maintien (8, 10) sont solidaires l'un de l'autre et constituent un seul et même arbre de maintien.

## Claims

1. Rotorcraft blade provided with a rigid attachment filling (1) and with a spar (40) that extends along the span of the blade from a root (51) of the blade to a free end (52) of this blade, said attachment filling (1) having top, bottom, front, rear, left side, and right side faces (2, 3, 4, 5, 7, and 6),
said spar (40) including a succession of fibre layers (31, 32, 33) that hold said attachment filling (1) captive at the root (51) of said blade, said spar (40) being secured to said front, rear, and left side faces (2, 3, 4, 5 and 7) of said attachment filling (1), **characterised in that** said spar (40) is secured to said top and bottom faces (2 and 3) of said attachment filling (1).

2. Blade according to Claim 1,
**characterised in that** said spar (40) has top, bottom, front, rear and end portions (43, 44, 41, 42 and 45) secured respectively to the top, bottom, front, rear and left side faces (2, 3, 4, 5 and 7) of said attachment filling (1).

3. Blade according to Claim 2,
**characterised in that** said spar (40) has rounded edges between its various portions.

4. Blade according to either one of Claims 2 to 3,
**characterised in that** said end portion (45) is concave, its concavity facing the free end (52) of the blade, opposite its root (51).

5. Blade according to any one of the preceding claims,
**characterised in that** said spar (40) is a wound spar, said succession of layers consisting of a stack of fibre layers (31, 32, 33).

6. Blade according to according to any one of the preceding claims,
**characterised in that** said succession comprises at least one stack (30) provided with first, second, and third fibre layers (31, 32, 33) respectively having first, second, and third angulations (A1, A2, A3) relative to a longitudinal axis (AX), said first and third angulations (A1, A3) lying in the range 15° to 90°, and said second angulation (A2) lying in the range 0° to 15°.

7. Blade according to according to any one of the preceding claims,
**characterised in that** said spar (40) opens out on the side of the free end (52) of the blade.

8. Blade according to according to any one of the preceding claims,
**characterised in that** said spar (40) and the attachment filling (1) include at least one passage (9', 9', 46', 46") to allow a fastening pin to be inserted.

9. Method of fabricating a rotorcraft blade according to any one of Claims 1 to 8,
**characterised in that** the spar of the blade is fabricated by performing the following steps in particular and in succession:
a) a first support shaft (8) is secured to a rigid attachment filling (1) of the blade that is reversibly fastened to a mandrel (20);
b) fibres are placed around an assembly comprising said attachment filling (1) and said mandrel (20) in order to fabricate a spar (40) of said blade, said spar (40) then including a succession of fibre layers (31, 32, 33) that hold said attachment filling (1) captive at the root (51) of said blade; and
c) said first shaft (8) is removed after the polymerisation of the spar.

10. Fabrication method according to Claim 9,
**characterised in that** during step c), a distal end (47) is cut off the resulting spar (40), i.e. the distal end (47) of the spar (40) that is opposite said attachment filling (1), in order to remove said mandrel (20).

11. Fabrication method according to according to either one of Claims 9 to 10,
**characterised in that** a projecting portion (8') of the first shaft (8) projects from the attachment filling (1) at the end of step c), and the first shaft is removed and the fibres that were covering said projecting portion (8') are cut off.

12. Method according to any one of Claims 9 to 11,
**characterised in that** during a step d), the spar (40) is pierced at the attachment filling (1) in order to allow the passage of at least one pin for fastening the blade to a rotor hub.

13. Method according to Claim 12,
**characterised in that** prior to step a), at least one orifice (9', 9") is formed in the attachment filling so as to be in register with the piercing (46', 46") performed during step d).

14. Fabrication method according to any one of Claims 9 to 13,
**characterised in that** the mandrel (20) has a rigid core (21) surrounded by a meltable zone (22) covered with an inflatable bladder (23), and during an intermediate step b') between steps b) and c), said meltable zone (22) is at least partly destroyed so as to be able to remove the mandrel (20) subsequently.

15. Fabrication method according to any one of Claims 9 to 14,
**characterised in that** during step a), said mandrel (20) is secured to a second support shaft (10).

16. Fabrication method according to Claim 15, **characterised in that** the first and second support shafts (8, 10) are joined together and constitute a single common support shaft.

## Patentansprüche

1. Blatt eines Drehflügelflugzeugs mit einer steifen Füllung der Blattwurzel (1) und einem Längsträger (40), der sich gemäß der Spannweite des Blattes von einem Fuß (51) des Blattes auf das freie Ende (52) des Blattes hin erstreckt, wobei die Füllung der Blattwurzel (1) obere (2), untere (3), vordere (4), hintere (5), seitlich linke (7) und seitlich rechte (8) Flächen aufweist, wobei der Längsträger (40) eine Aufeinanderfolge von Faserschichten (31, 32, 33) aufweist, die die Füllung der Blattwurzel (1) auf der Höhe des Fußes (51) des Blattes einschließen, wobei der Längsträger (40) an den vorderen (4), hinteren (5) und seitlich linken (7) Flächen der Füllung der Blattwurzel (1) befestigt ist, **dadurch gekennzeichnet, dass** der Träger (40) an den oberen (2) und unteren (3) Flächen der Füllung der Blattwurzel (1) befestigt ist.

2. Blatt nach Anspruch 1, **dadurch gekennzeichnet, dass** der Längsträger (40) obere (43), untere (44), vodere (41), hintere (42) Bereiche und einen Bodenbereich (45) aufweist, die jeweils an den oberen (2), unteren (3), vorderen (4), hinteren (5) und seitlich linken (7) Flächen der Füllung der Blattwurzel (1) befestigt sind.

3. Blatt nach Anspruch 2, **dadurch gekennzeichnet, dass** der Längsträger (40) abgerundete Kanten zwischen den verschiedenen Bereichen aufweist.

4. Blatt nach einem der Ansprüche 2 oder 3, **dadurch gekennzeichnet, dass** der Bodenbereich (45) konkav ist und seine Konkavität bezüglich des freien Endes (52) des Blattes gegenüber seinem Fuß (51) vorliegt.

5. Blatt nach einem der vorstehenden Ansprüche, **dadurch gekennzeichnet, dass** der Längsträger (40) ein gewickelter Längsträger ist, und die Aufeinanderfolge von Schichten aus einem Stapel von Faserschichten (31, 32, 33) besteht.

6. Blatt nach einem der vorstehenden Ansprüche, **dadurch gekennzeichnet, dass** die Aufeinanderfolge mindestens einen Stapel (30) aufweist, der mit einer ersten, einer zweiten und einer dritten Schicht Fasern (31, 32, 33) versehen ist, die eine erste, eine zweite und eine dritte Winkelausrichtung (A1, A2, A3) bezüglich einer Längsachse (AX) aufweisen, wobei die ersten und dritten Winkelausrichtungen (A1, A3) zwischen 15 und 90° liegen, während die zweite Winkelausrichtung (A2) zwischen 0 und 15° liegt.

7. Blatt nach einem der vorstehenden Ansprüche, **dadurch gekennzeichnet, dass** der Längsträger (40) sich von der Seite des freien Endes (52) des Blattes aus erstreckt.

8. Blatt nach einem der vorstehenden Ansprüche, **dadurch gekennzeichnet, dass** der Längsträger (40) und die Füllung der Blattwurzel (1) mindestens eine Passage (9', 9", 46', 46") für die Aufnahme einer Befestigungsklammer aufweist.

9. Verfahren zur Herstellung eines Blattes eines Drehflügelflugzeugs nach einem der Ansprüche 1 bis 8, **dadurch gekennzeichnet, dass** man nacheinander folgende Schritte zur Herstellung des Längsträgers des Blattes durchführt: a) man befestigt einen ersten Haltebalken (8) an einer festen Füllung der Wurzel (1) des Blattes, welches reversibel an einer Hülse (20) befestigt ist,
b) man ordnet Fasern um die Gesamtheit bestehend aus der Füllung der Blattwurzel (1) und der Hülse (20) an, um einen Längsträger (40) des Blattes herzustellen, wobei der Längsträger (40) eine Aufeinanderfolge von Schichten (31, 32, 33) von Fasern aufweist, die die Füllung der Blattwurzel (1) auf der Höhe des Fußes (51) des Blattes einschießen, und
c) man entfernt den ersten Balken (8) nach der Polymerisation des Längsträgers.

10. Verfahren zur Herstellung nach Anspruch 9, **dadurch gekennzeichnet, dass** während des Schrittes c) ein distales Ende (47) des erhaltenen Längsträgers, d.h. das distale Ende (47) des Längsträgers (40), gegenüber der Füllung der Blattwurzel (1) aufgeschnitten wird, um die Hülse (20) zu entfernen.

11. Verfahren nach einem der Ansprüche 9 oder 10, **dadurch gekennzeichnet, dass** ein vorstehender Teil (8') des ersten Balkens (8) vorsteht und am Ende des Schrittes c) der erste Balken entfernt wird und die Fasern, die den vorstehenden Bereich (8') bedeckten, abgeschnitten werden.

12. Verfahren nach einem der Ansprüche 9 bis 11, **dadurch gekennzeichnet, dass** während eines Schrittes d) der Längsträger (40) auf der Höhe der Füllung der Blattwurzel (1) durchstochen wird, um den Durchgang mindestens einer Befestigungsklammer des Blattes an einer Rotornabe zu ermöglichen.

13. Verfahren nach Anspruch 12, **dadurch gekennzeichnet, dass** vor dem Schritt a) mindestens eine Öffnung (9', 9") in der Füllung der Blattwurzel erzeugt wird, gegenüber der Bohrung (46', 46"), die in Schritt d) durchgeführt wird.

14. Verfahren zur Herstellung nach einem der Ansprüche 9 bis 13, **dadurch gekennzeichnet, dass** die Hülse (20) eine steife Seele (21) aufweist, die von einem schmelzbaren Bereich (22) umgeben ist, der mit einer aufblasbaren Blase (23) umgeben ist, wobei während eines Zwischenschrittes b'), zwischen den Schritten b) und c) der schmelzbare Bereich (22) mindestens teilsweise zerstört wird, um die Hülse (20) später zu entfernen.

15. Verfahren zur Herstellung nach einem der Ansprüche 9 bis 14, **dadurch gekennzeichnet, dass** während des Schrittes a) die Hülse (20) an einem zweiten Haltebalken (10) befestigt wird.

16. Verfahren zur Herstellung nach Anspruch 15, **dadurch gekennzeichnet, dass** die ersten und die zweiten Halterungsbalken (8, 10) miteinander fest verbunden sind und einen einzigen Halterungsbalken bilden.
